# EUROPÄISCHE PATENTSCHRIFT

(11) **EP 3 669 454 B1**
(45) Veröffentlichungstag und Bekanntmachung des Hinweises auf die Patenterteilung: **25.11.2020**
(21) Anmeldenummer: 18759057.5
(22) Anmeldetag: 12.08.2018
(51) Int. Cl.: H02S 50/00

(54) **VERFAHREN UND VORRICHTUNG ZUR ERFASSUNG EINER MAXIMALEN ANLAGENLEISTUNG EINER PHOTOVOLTAIKANLAGE**
METHOD AND DEVICE FOR DETECTING A MAXIMUM SYSTEM OUTPUT OF A PHOTOVOLTAIC SYSTEM
PROCÉDÉ ET DISPOSITIF DE DÉTECTION D'UNE PUISSANCE MAXIMALE D'UNE INSTALLATION PHOTOVOLTAÏQUE

(30) Priorität: 17.08.2017 DE 102017118764
(43) Veröffentlichungstag der Anmeldung: 24.06.2020
(73) Patentinhaber: SMA Solar Technology AG, 34266 Niestetal (DE)
(72) Erfinder: BUENEMANN, Mathias, 34125 Kassel (DE)
(86) Internationale Anmeldenummer: PCT/EP2018/071844
(87) Internationale Veröffentlichungsnummer: WO 2019/034571

(56) Entgegenhaltungen:
- DE-U1-202010 016 207
- US-A1- 2012 197 557

## Beschreibung

### TECHNISCHES GEBIET DER ERFINDUNG

Die Erfindung bezieht sich auf ein Verfahren zur Erfassung einer zu einem Zeitpunkt maximal möglichen Anlagenleistung einer zu diesem Zeitpunkt nicht bei dieser maximal möglichen Anlagenleistung betriebenen Photovoltaikanlage, die mehrere Photovoltaikgeneratoren umfasst, wobei die Photovoltaikgeneratoren zu dem Zeitpunkt zumindest teilweise in unterschiedlichen Betriebspunkten betrieben werden. Weiterhin bezieht sich die Erfindung auf eine Photovoltaikanlage mit mehreren Photovoltaikgeneratoren, die an einzelne DC/DC- und/oder DC/AC-Wandler angeschlossen sind, und mit einer Steuerung für die einzelnen DC/DC- und/oder DC/AC-Wandler, mit der verschiedenen Betriebspunkte der einzelnen Photovoltaikgeneratoren einstellbar sind.

Die Erfassung der zu einem Zeitpunkt maximal möglichen Anlagenleistung einer zu diesem Zeitpunkt nicht bei dieser maximal möglichen Anlagenleistung betriebenen Photovoltaikanlage kann zu dem Zweck dienen, die Photovoltaikanlage grundsätzlich bei einer tatsächlichen Anlagenleistung zu betreiben, die um einen vorgegebenen Betrag unter der maximal möglichen Anlagenleistung liegt, damit dieser vorgegebene Betrag als mit der Photovoltaikanlage bereitstellbare Regelleistung zur Verfügung steht.

### STAND DER TECHNIK

Aus der EP 2 328 259 A1 ist ein Verfahren für das Leistungsmanagement in einer Photovoltaikanlage bekannt, bei dem zum Bereitstellen einer Wirkleistungsreserve mit der Photovoltaikanlage eine erste Gruppe von Photovoltaikgeneratoren betrieben wird, ohne ihre Wirkleistung zu beschränken, wobei aus der Wirkleistung der ersten Gruppe von Photovoltaikgeneratoren eine maximal mögliche Anlagenleistung der Photovoltaikanlage abgeschätzt wird, und eine zweite Gruppe von Photovoltaikgeneratoren der Photovoltaikanlage unter Beschränkung ihrer Leistung auf einen Wert betrieben wird, der basierend auf der maximal möglichen Anlagenleistung und der gewünschten Wirkleistungsreserve festgelegt wird. Alternativ kann die maximal mögliche Anlagenleistung mittels einer kalibrierten Photovoltaikzelle oder mittels Abtasten einer Kennlinie der Photovoltaikgeneratoren durch Variieren der Betriebsspannung der Photovoltaikgeneratoren bestimmt werden. Aus der DE20 2010 016207U1 ist ein Verfahren zum Bestimmen einer maximal erzeugbaren Abgabenleistung einer Photovoltaikanlage bekannt.

Aus der DE 10 2010 038 941 A1 ist ein Verfahren zur Erfassung einer in einem Zeitraum potentiell möglich gewesenen, aber tatsächlich nicht eingespeisten Einspeiseenergiemenge einer Photovoltaikanlage bekannt, die mehrere Wechselrichter zur Einspeisung elektrischer Energie von jeweils einem oder mehreren Photovoltaikgeneratoren in ein Wechselstromnetz aufweist. Die Photovoltaikanlage wird in dem Zeitraum an das Wechselstromnetz gekoppelt betrieben, und die Wechselrichter werden unterschiedlich und insgesamt so betrieben, dass eine gegenüber der potentiell möglich gewesenen Einspeiseenergiemenge reduzierte Einspeiseenergiemenge eingespeist wird. Dabei wird in dem Zeitraum mindestens ein Wechselrichter im Normalbetrieb mit maximal möglicher Einspeiseleistung betrieben, während mindestens ein anderer Wechselrichter mit einer geringeren als seiner maximal möglichen Einspeiseleistung betrieben wird. In verschiedenen Teilzeiträumen des Zeitraums können auch unterschiedliche Teilmengen der Wechselrichter im Normalbetrieb mit maximal möglicher Einspeiseleistung betrieben werden, um deren Betriebspunkte maximaler Leistung direkt zu erfassen. Weiter offenbart die DE 10 2010 038 941 A1 bei einer Photovoltaikanlage mit nur einem Wechselrichter, diesen zur Erfassung einer in einem Zeitraum potentiell möglich gewesenen, aber tatsächlich nicht eingespeisten Einspeiseenergiemenge der Photovoltaikanlage in unterschiedlichen Teilzeiträumen des Zeitraums derart unterschiedlich zu betreiben, dass er einen Teilbereich einer Spannungs-Leistungs-Kennlinie der angeschlossenen Photovoltaikgeneratoren abtastet, in dem ein Betriebspunkt mit maximal möglicher Generatorleistung liegt. Die Spannungs-Leistungs-Kennlinie und deren Betriebspunkt maximal möglicher Generatorleistung werden dann aus ihren bei dem Abtasten erfassten Betriebspunkten extrapoliert. Dabei ist das Integral der über den Zeitraum hinweg eingespeisten unterschiedlichen elektrischen Leistungen die Einspeiseenergiemenge, die gegenüber der in dem Zeitraum potentiell möglich gewesenen Einspeiseenergiemenge reduziert ist.

### AUFGABE DER ERFINDUNG

Der Erfindung liegt die Aufgabe zugrunde, ein effizientes Verfahren zur Erfassung einer zu einem Zeitpunkt maximal möglichen Anlagenleistung einer zu diesen Zeitpunkt nicht bei dieser maximal möglichen Anlagenleistung betriebenen Photovoltaikanlage aufzuzeigen, um zwar einerseits einen bestimmten Betrag von Regelleistung mit der Photovoltaikanlage bereitzuhalten, um aber andererseits die Photovoltaikanlage um auch nicht mehr als diesen Betrag der bereitgehaltenen Regelleistung unterhalb ihrer maximal möglichen Anlagenleistung zu betreiben, um so die während der Bereitstellung der Regelleistung tatsächlich erbrachte Anlagenleistung zu maximieren.

### LÖSUNG

Die Aufgabe der Erfindung wird durch ein Verfahren mit den Merkmalen des unabhängigen Patentanspruchs 1 gelöst. Die abhängigen Patentansprüche 2 bis 11 betreffen bevorzugte Ausführungsformen des erfindungsgemäßen Verfahrens.

### BESCHREIBUNG DER ERFINDUNG

Bei einem erfindungsgemäßen Verfahren zur Erfassung einer zu einem Zeitpunkt maximal möglichen Anlagenleistung einer zu diesem Zeitpunkt nicht bei dieser maximal möglichen Anlagenleistung betriebenen Photovoltaikanlage, die mehrere Photovoltaikgeneratoren umfasst, werden die Photovoltaikgeneratoren zu dem Zeitpunkt zumindest teilweise in unterschiedlichen Betriebspunkten betrieben. Beziehungen zwischen den unterschiedlichen Betriebspunkten der einzelnen Photovoltaikgeneratoren und virtuellen Betriebspunkten eines Standardgenerators werden definiert. Aus den den unterschiedlichen Betriebspunkten der einzelnen Photovoltaikgeneratoren entsprechenden virtuellen Betriebspunkten des Standardgenerators werden eine Kennlinie des Standardgenerators und ein Maximum dieser Kennlinie zu dem Zeitpunkt bestimmt; und aus dem Maximum der Kennlinie des Standardgenerators wird die maximal mögliche Anlagenleistung zu dem Zeitpunkt bestimmt.

Der Standardgenerator dient bei dem erfindungsgemäßen Verfahren als Bezugssystem, in dem die unterschiedlichen Betriebspunkte der Photovoltaikgeneratoren ausgewertet werden. Die Beziehungen zwischen den unterschiedlichen Betriebspunkten der einzelnen Photovoltaikgeneratoren und den virtuellen Betriebspunkten des Standardgenerators kompensieren die Unterschiede zwischen den Photovoltaikgeneratoren und bilden die einzelnen Photovoltaikgeneratoren mit ihren Betriebspunkten auf den Standardgenerator ab. Anders ausgedrückt beschreiben mathematische Abbildungen die Beziehungen zwischen den unterschiedlichen Betriebspunkten der einzelnen Photovoltaikgeneratoren und den virtuellen Betriebspunkten des Standardgenerators. Durch die resultierenden virtuellen Betriebspunkte des Standardgenerators ist es möglich, zu dem jeweiligen Zeitpunkt die Kennlinie des Standardgenerators zu bestimmen und damit auch das Maximum dieser Kennlinie zu dem jeweiligen Zeitpunkt. Aus diesem Maximum der Kennlinie des Standardgenerators ist die maximal mögliche Anlagenleistung zu dem jeweiligen Zeitpunkt bestimmbar. Hierfür können insbesondere die Beziehungen zwischen den Betriebspunkten der einzelnen Photovoltaikgeneratoren und den virtuellen Betriebspunkten des Standardgenerators genutzt werden, um das Maximum der Kennlinie des Standardgenerators auf einen entsprechenden Betriebspunkt maximaler Leistung der einzelnen Photovoltaikgeneratoren abzubilden.

Das erfindungsgemäße Verfahren lässt sich auch so beschreiben, dass mit den in unterschiedlichen Betriebspunkten betriebenen Photovoltaikgeneratoren zu jedem Zeitpunkt die Kennlinie des Standardgenerators abgetastet wird. Damit ist zu jedem Zeitpunkt und ohne Variation der Betriebspunkte der einzelnen Photovoltaikgeneratoren die maximal mögliche Anlagenleistung aus dem Maximum dieser Kennlinie des Standardgenerators bestimmbar. So treten bei der Durchführung des erfindungsgemäßen Verfahrens keine schwankenden Ausgangsleistungen von den einzelnen Photovoltaikgeneratoren auf, die möglichst in Echtzeit kompensiert werden müssten. Vielmehr kann die Ausgangsleistung der einzelnen Photovoltaikgeneratoren bei dem erfindungsgemäßen Verfahren primär auf die Anlagenleistung abgestimmt werden, die zu dem jeweiligen Zeitpunkt mit der Photovoltaikanlage bereitgestellt werden soll.

Um die Kennlinie des Standardgenerators zuverlässig aus den virtuellen Betriebspunkten des Standardgenerators bestimmen zu können, erweist es sich als vorteilhaft, wenn die Photovoltaikgeneratoren zu dem jeweiligen Zeitpunkt in Betriebspunkten betrieben werden, die mindestens drei unterschiedlichen virtuellen Betriebspunkten des Standardgenerators entsprechen. Die mindestens drei unterschiedlichen virtuellen Betriebspunkte können über die gesamte Kennlinie verteilt sein, beispielsweise gleichmäßig oder mit Konzentration auf den Bereich ihres Maximums.

Vorzugsweise werden die einzelnen Photovoltaikgeneratoren zu dem jeweiligen Zeitpunkt in Betriebspunkten betrieben, die mindestens fünf oder noch mehr bevorzugt mindestens sieben unterschiedlichen virtuellen Betriebspunkten des Standardgenerators entsprechen, um eine ausreichende statistische Basis für das Bestimmen der Kennlinie des Standardgenerators und ihres Maximums zu haben.

In einer Ausführungsform des erfindungsgemäßen Verfahrens umfassen die Betriebspunkte, in denen die einzelnen Photovoltaikgeneratoren zu dem jeweiligen Zeitpunkt betrieben werden, Betriebspunkte, die virtuellen Betriebspunkten des Standardgenerators entsprechen, welche über einen an ihr Maximum angrenzenden Bereich der Kennlinie des Standardgenerators hinweg verteilt sind. Diese Ausführungsform des erfindungsgemäßen Verfahrens berücksichtigt, dass Photovoltaikgeneratoren einer Photovoltaikanlage häufig nur durch Verschieben ihrer Betriebspunkte in einer Richtung weg von ihrem Betriebspunkt maximaler Leistung abgeregelt werden. Diese Vorgehensweise muss bei der Durchführung des erfindungsgemäßen Verfahrens nicht geändert werden. Vielmehr kann die Kennlinie des Standardgenerators gerade in dieser Richtung abgetastet werden. Dabei kann zwar auch einer der unterschiedlichen Betriebspunkte, in denen die einzelnen Photovoltaikgeneratoren betrieben werden, der Betriebspunkt maximaler Leistung eines der Photovoltaikgeneratoren sein, dies ist bei dem erfindungsgemäßen Verfahren aber weder erforderlich noch wird es angestrebt, weil hieraus nur dann eine zusätzliche Aussage über die Kennlinie des Standardgenerators getroffen werden kann, wenn der jeweilige Photovoltaikgenerator genau in seinem Betriebspunkt maximaler Leistung betrieben wird und wenn zugleich die Beziehung zwischen den unterschiedlichen Betriebspunkten dieses Photovoltaikgenerators und den virtuellen Betriebspunkten des Standardgenerators exakt, d. h. den wahren Verhältnissen genau entsprechend, definiert sind.

Praktisch werden die einzelnen Photovoltaikgeneratoren bei dem erfindungsgemäßen Verfahren regelmäßig mit Hilfe einzelner DC/DC- und/oder DC/AC-Wandler in den unterschiedlichen Betriebspunkten betrieben. In einer Photovoltaikanlage sind für die einzelnen Photovoltaikgeneratoren, die in unterschiedlichen Betriebspunkten betrieben werden können, immer einzelne DC/DC- und/oder DC/AC-Wandler vorhanden, um die einzelnen Photovoltaikgeneratoren trotz ihrer unterschiedlichen Betriebspunkte mit einem einzigen Ausgang der Photovoltaikanlage zu verbinden und/oder um alle Photovoltaikgeneratoren an ein externes Stromnetz anzuschließen.

Zum Bestimmen der maximal möglichen Anlagenleistung zu dem jeweiligen Zeitpunkt können konkret die maximalen Leistungen der einzelnen Photovoltaikgeneratoren aus dem Maximum der Kennlinie des Standardgenerators und den Beziehungen zwischen den Betriebspunkten der einzelnen Photovoltaikgeneratoren und den virtuellen Betriebspunkten des Standardgenerators berechnet werden. Anders gesagt, wird, wie bereits oben angedeutet wurde, das Maximum der Kennlinie des Standardgenerators auf einen Betriebspunkt maximaler Leistung jedes einzelnen Photovoltaikgenerators abgebildet. Die entsprechenden maximalen Leistungen der einzelnen Photovoltaikgeneratoren werden dann aufsummiert.

Die Beziehungen zwischen den Betriebspunkten der einzelnen Photovoltaikgeneratoren und den virtuellen Betriebspunkten des Standardgenerators sollten verschiedene Aspekte berücksichtigen, aus denen Unterschiede der Kennlinien der einzelnen Photovoltaikgeneratoren resultieren können. Hierzu zählen:
- unterschiedliche Nennleistung der einzelnen Photovoltaikgeneratoren;
- unterschiedliche Typen der einzelnen Photovoltaikgeneratoren;
- Herstellungstoleranzen der einzelnen Photovoltaikgeneratoren;
- unterschiedliche Degenerationen der einzelnen Photovoltaikgeneratoren;
- unterschiedliche Ausrichtungen der einzelnen Photovoltaikgeneratoren zur Sonne;
- unterschiedliche Verschattungen der einzelnen Photovoltaikgeneratoren;
- unterschiedliche Temperaturen der einzelnen Photovoltaikgeneratoren;
- unterschiedliche Typen der einzelnen DC/DC- und/oder DC/AC-Wandler und
- Herstellungstoleranzen der einzelnen DC/DC- und/oder DC/AC-Wandler
sowie auch alle weiteren Unterschiede zwischen den einzelnen DC/DC und/oder DC/AC-Wandlern.

Da sich einige der obigen Aspekte, wie beispielsweise unterschiedliche Verschattungen oder unterschiedliche Temperaturen, der einzelnen Photovoltaikgeneratoren mit der Zeit ändern, ist es bei dem erfindungsgemäßen Verfahren bevorzugt, wenn die Beziehungen zwischen den Betriebspunkten der einzelnen Photovoltaikgeneratoren und den virtuellen Betriebspunkten des Standardgenerators nicht nur einmalig, sondern speziell für den jeweiligen Zeitpunkt bestimmt werden. Anders gesagt werden diese Beziehungen vorzugsweise ständig aktualisiert, um aus dem Maximum der Kennlinie des Standardgenerators möglichst exakt auf die maximal mögliche Anlagenleistung zu dem jeweiligen Zeitpunkt schließen zu können.

Beim Bestimmen der Kennlinie des Standardgenerators aus seinen den unterschiedlichen Betriebspunkten der einzelnen Photovoltaikgeneratoren entsprechenden virtuellen Betriebspunkten kann eine Modellkennlinie an die virtuellen Betriebspunkte angefittet werden. Diese Modellkennlinie kann eine begrenzte Anzahl von Variablen aufweisen, durch deren Variation sie an die virtuellen Betriebspunkte angefittet werden kann. Damit wird einerseits berücksichtigt, dass die Kennlinie des Standardgenerators nicht jede beliebige Form annehmen wird. Andererseits wird auf diese Weise das Anfitten der Modellkennlinie an die virtuellen Betriebspunkte vereinfacht und bei nur wenigen virtuellen Betriebspunkten oder statistischen Schwankungen zwischen den virtuellen Betriebspunkten sicherer.

Beim Anfitten der Modellkennlinie an die virtuellen Betriebspunkte können über ein vorgegebenes Maß hinaus von der bestmöglich angepassten Modellkennlinie abweichende Betriebspunkte verworfen werden. Vorzugsweise werden diese verworfenen Betriebspunkte aber nicht als statistische Ausreißer betrachtet, sondern genutzt, um die Beziehungen zwischen den Betriebspunkten der Photovoltaikgeneratoren, die zu den verworfenen Betriebspunkten gehören, und den virtuellen Betriebspunkten des Standardgenerators zu aktualisieren. Dieses Aktualisieren der Beziehungen bedeutet, dass sie so modifiziert werden, dass sich die jeweiligen virtuellen Betriebspunkte an die angefittete Modellkennlinie annähern. Anders gesagt, erkennt das erfindungsgemäße Verfahren selbst, wenn sich die realen Verhältnisse zwischen den Betriebspunkten einzelner Photovoltaikgeneratoren und den virtuellen Betriebspunkten des Standardgenerators so ändern, dass die erfindungsgemäß definierten Beziehungen hieran angepasst werden müssen, und das erfindungsgemäße Verfahren gibt auch die Richtung der notwendigen Anpassung an. Dabei können die angepassten Beziehungen zunächst nur für das Bestimmen der maximal möglichen Anlagenleistung zu dem jeweiligen Zeitpunkt unter Berücksichtigung auch der zunächst von der bestmöglich angepassten Modellkennlinie abweichende Betriebspunkte verwendet werden, bevor die zunächst abweichenden Betriebspunkte auch bei der Anpassung der Modellkennlinie berücksichtigt werden.

Wenn das erfindungsungemäße Verfahren durchgeführt wird, um mit der Photovoltaikanlage einen bestimmten Betrag an Regelleistung bereitzustellen, vereinfacht es, die unterschiedlichen Betriebspunkte der einzelnen Photovoltaikgeneratoren so einzustellen, dass die Photovoltaikanlage zu jedem Zeitpunkt bei einer höchst möglichen tatsächlichen Anlagenleistung betrieben wird, die aber dennoch um den vorgegebenen Betrag der Regelleistung unter der zu dem Zeitpunkt maximal möglichen Anlagenleistung der Photovoltaikanlage liegt.

Bei einer mit offenbarten Photovoltaikanlage mit mehreren Photovoltaikgeneratoren, die an einzelne DC/DC- und/oder DC/AC-Wandler angeschlossen sind, und mit einer Steuerung für die einzelnen DC/DC- und/oder DC/AC-Wandler, mit der verschiedene Betriebspunkte der angeschlossenen Photovoltaikgeneratoren einstellbar sind, ist die Steuerung zur Durchführung des erfindungsgemäßen Verfahrens ausgebildet. Die Steuerung kann die unterschiedlichen Betriebspunkte also insbesondere so einstellen, dass die Photovoltaikanlage zu jedem Zeitpunkt, zu dem die von ihr vorgehaltenen Regelleistung nicht abgefordert wird, mindestens um einen vorgegebenen Betrag der gewünschten Regelleistung unter der zu dem Zeitpunkt maximal möglichen Anlagenleistung der Photovoltaikanlage liegt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem DC/DC-Wandler die Rede ist, ist dies so zu verstehen, dass genau ein DC/DC-Wandler, zwei DC/DC-Wandler oder mehr DC/DC-Wandler vorhanden sind.

Die in den Patentansprüchen angeführten Merkmale können durch andere Merkmale ergänzt werden oder die einzigen Merkmale sein, die der jeweils beanspruchte Gegenstand aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Photovoltaikanlage.
- **Fig. 2**: zeigt eine unter idealen Bedingungen an virtuelle Betriebspunkte eines Standardgenerators angefittete Kennlinie.
- **Fig. 3**: zeigt eine unter realen Bedingungen an virtuelle Betriebspunkte des Standardgenerators angefittete Kennlinie; und
- **Fig. 4**: ist ein Ablaufdiagramm einer Ausführungsform des erfindungsgemäßen Verfahrens.

### FIGURENBESCHREIBUNG

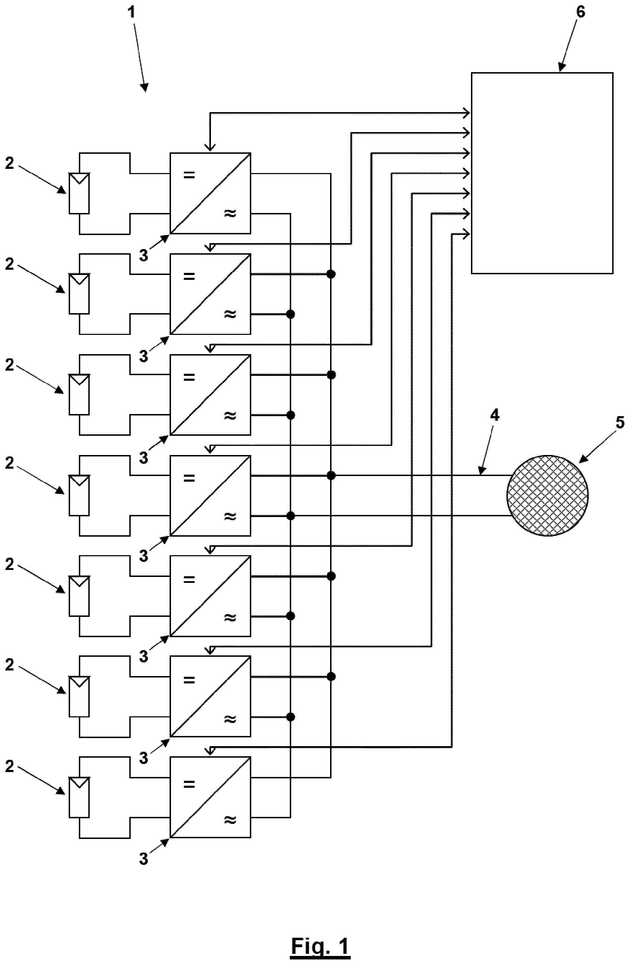

Die in **Fig. 1** illustrierte Photovoltaikanlage 1 weist eine Mehrzahl von hier sieben Photovoltaikgeneratoren 2 auf, die jeweils über einen DC/AC-Wandler 3 an einen gemeinsamen Ausgang 4 der Photovoltaikanlage angeschlossen sind. Über den gemeinsamen Ausgang 4 speist die Photovoltaikanlage 1 elektrische Leistung in ein Wechselstromnetz 5 ein. Eine Steuerung 6 der Photovoltaikanlage steuert die DC/AC-Wandler 3. Sie empfängt zugleich Informationen von den DC/AC-Wandlern 3 und wertet diese aus. Insbesondere gibt die Steuerung 6 den einzelnen DC/AC-Wandlern 3 vor, wie viel Leistung sie jeweils in das Wechselstromnetz 5 einspeisen, und diese Vorgabe erfolgt abhängig davon, wie groß eine maximal mögliche Anlagenleistung der Photovoltaikanlage 1 aktuell ist. So steuert die Steuerung 6 in einem Grundbetrieb die einzelnen DC/AC-Wandler so an, dass sie zusammen eine tatsächliche Anlagenleistung in das Wechselstromnetz 5 einspeisen, die um den Betrag einer gewünschten Regelleistung unter der maximal möglichen Anlagenleistung zurückbleibt. Dieser Betrag der gewünschten Regelleistung steht dann in einem Regelleistungsbetrieb der Photovoltaikanlage als Regelleistung für das Wechselstromnetz 5 zur Verfügung und kann von der Steuerung 6 durch entsprechendes Ansteuern der DC/AC-Wandler 3 in benötigten Anteilen in das Wechselstromnetz 5 eingespeist werden.

Anders gesagt wird die Photovoltaikanlage 1 in ihrem Grundbetrieb abgeregelt betrieben. Dies erfolgt nach dem erfindungsgemäßen Verfahren so, dass die Steuerung 6 die einzelnen DC/AC-Wandler 3 unterschiedlich abregelt, so dass die an sie angeschlossenen Photovoltaikgeneratoren 2 in unterschiedlichen Betriebspunkten betrieben werden. Diese unterschiedlichen Betriebspunkte der Photovoltaikgeneratoren 2 werden dann auf virtuelle Betriebspunkte eines Standardgenerators abgebildet. Diese Abbildung erfolgt nach für den jeweiligen Zeitpunkt definierten Beziehungen zwischen den Betriebspunkten der einzelnen Photovoltaikgeneratoren 2 und den virtuellen Betriebspunkten des Standardgenerators, mit denen alle relevanten Unterschiede zwischen den einzelnen Photovoltaikgeneratoren 2 und ihren aktuellen Betriebsbedingungen berücksichtigt werden.

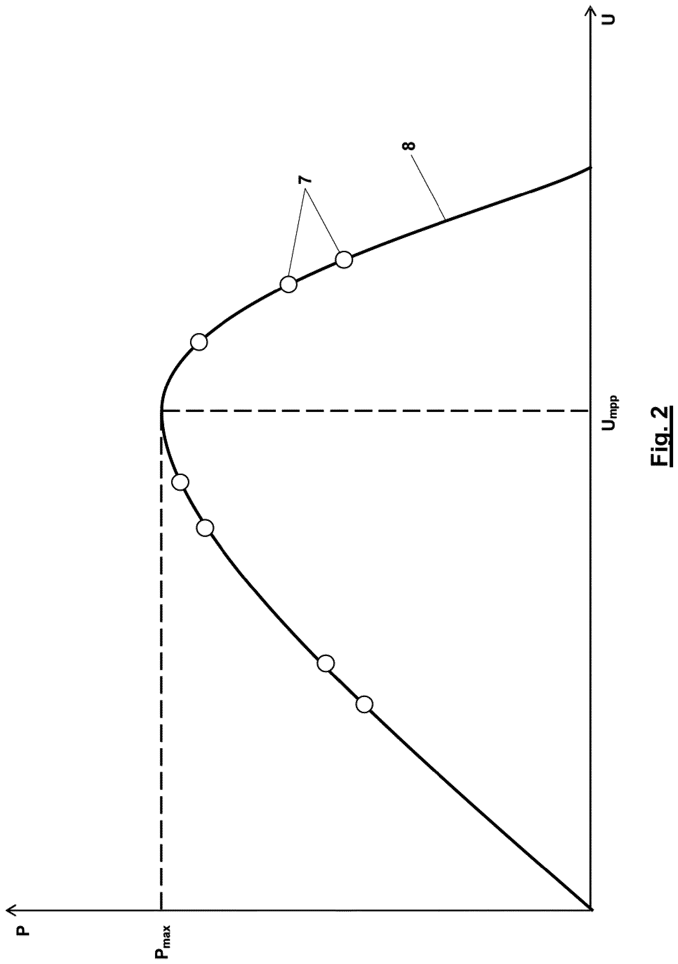

**Fig. 2** zeigt ein P(U)-Diagramm, in dem die virtuellen Betriebspunkte 7 des Standardgenerators zu den entsprechenden realen Betriebspunkten der sieben Photovoltaikgeneratoren 2 gemäß Fig. 1 für einen bestimmten Zeitpunkt eingezeichnet sind. Weiterhin ist in Fig. 2 eine an diese virtuellen Betriebspunkte 7 angefittete Kennlinie 8 dargestellt, die ein bestimmtes Maximum Pₘₐₓ (Uₘₚₚ) aufweist. Dieses Maximum Pₘₐₓ (Uₘₚₚ) entspricht keinem der virtuellen Betriebspunkte 7, sondern liegt hier irgendwo zwischen diesen. Aus dem Maximum Pₘₐₓ (Uₘₚₚ) lässt sich aber unter Berücksichtigung der Beziehungen zwischen den unterschiedlichen Betriebspunkten der einzelnen Photovoltaikgeneratoren 2 und den virtuellen Betriebspunkten 7 des Standardgenerators der aktuelle Betriebspunkt maximaler Leistung jedes der Photovoltaikgeneratoren 2 und damit die maximal mögliche Leistung jedes der Photovoltaikgeneratoren 2 zu dem jeweiligen Zeitpunkt bestimmen. Die Summe dieser maximal möglichen Leistungen der einzelnen Photovoltaikgeneratoren 2, die etwaige Verlustleistungen bereits berücksichtigen kann, ist die gesuchte maximal mögliche Anlagenleistung der Photovoltaikanlage 1 zu dem jeweiligen Zeitpunkt.

Gemäß Fig. 2 werden alle Photovoltaikgeneratoren 2 gemäß Fig. 1 in so unterschiedlichen Betriebspunkten betrieben, dass hieraus sieben unterschiedliche virtuelle Betriebspunkte resultieren, die zum Teil auf der einen und zum Teil auf der anderen Seite des Maximums Pₘₐₓ (Uₘₚₚ) angeordnet sind. Ausgehend von einer Modellkurve für die Kennlinie 8 reichen aber auch schon weniger virtuelle Betriebspunkte 7 aus, um die Kennlinie 8 ermitteln zu können. Zudem können die virtuellen Betriebspunkte 7 auch sämtlich auf einer Seite des Maximums Pₘₐₓ (Uₘₚₚ) liegen. Insbesondere können also alle Photovoltaikgeneratoren 2 dadurch abgeregelt betrieben werden, dass sie bei höherer Spannung als an ihrem Betriebspunkt maximaler Leistung betrieben werden. Außerdem können auch mehrere der Photovoltaikgeneratoren 2 in Betriebspunkten betrieben werden, die gleichen virtuellen Betriebspunkten 7 des Standardgenerators entsprechen.

Fig. 2 zeigt insoweit idealisierte Verhältnisse, als dass alle virtuellen Betriebspunkte 7 auf die hieran angefittete Kennlinie 8 des Standardgenerators fallen. In der Praxis ist dies eher selten der Fall, da es zu statistischen Schwankungen kommt und auch die Beziehungen zwischen den Betriebspunkten der einzelnen Photovoltaikgeneratoren und den virtuellen Betriebspunkten 7 des Standardgenerators nicht ideal definiert werden können, insbesondere wenn diese Beziehungen schnellere reale Veränderungen bei den Unterschieden zwischen den einzelnen Photovoltaikgeneratoren 2 berücksichtigen müssten, wie sie beispielsweise bei unterschiedlichen Verschattungen durch schnell wandernde Wolken auftreten. Auch unter diesen Bedingungen lässt sich aber durch eine große Anzahl von unterschiedlichen virtuellen Betriebspunkten 7 die Kennlinie 8 des Standardgenerators und deren Maximum Pₘₐₓ (Uₘₚₚ) so gut bestimmen, dass eine sehr genaue Aussage über die aktuell maximal mögliche Anlagenleistung getroffen werden kann. Damit wird es möglich, die in das Wechselstromnetz 5 im Normalfall eingespeiste Energie unter der Randbedingung zu maximieren, dass die gewünschte Regelleistung zuverlässig vorgehalten wird.

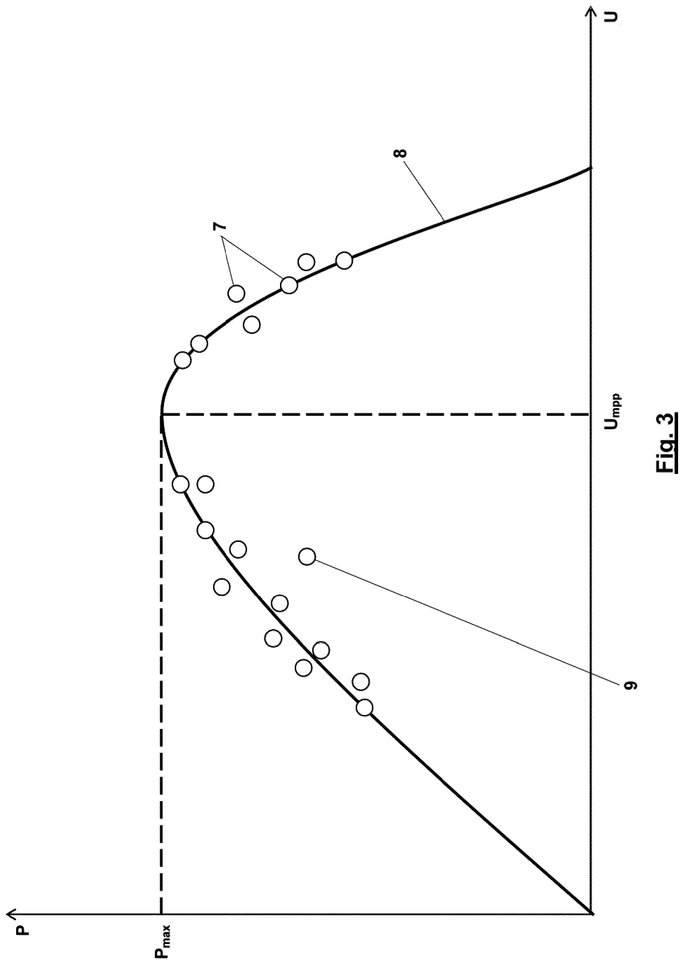

In **Fig. 3** ist eine reale Verteilung virtueller Betriebspunkte 7, 9 gezeigt, von denen ein virtueller Betriebspunkt 9 stark von der an die anderen virtuellen Betriebspunkte 7 angefittete Kennlinie 8 des Standardgenerators abweicht. Dieser virtuelle Betriebspunkt 9 kann für das Anfitten der Kennlinie 8 verworfen werden und seine starke Abweichung von der Kennlinie 8 kann zum Anlass genommen werden, die Beziehungen zwischen den Betriebspunkten des zugehörigen Photovoltaikgenerators 2 und den virtuellen Betriebspunkten 7 des Standardgenerators neu zu definieren. Zumindest ist eine solche Neudefinition sinnvoll, wenn der entsprechende Photovoltaikgenerator 2 über mehrere Zeitpunkte hinweg einen virtuellen Betriebspunkt 9 mit großem Abstand zu der Kennlinie 8 liefert.

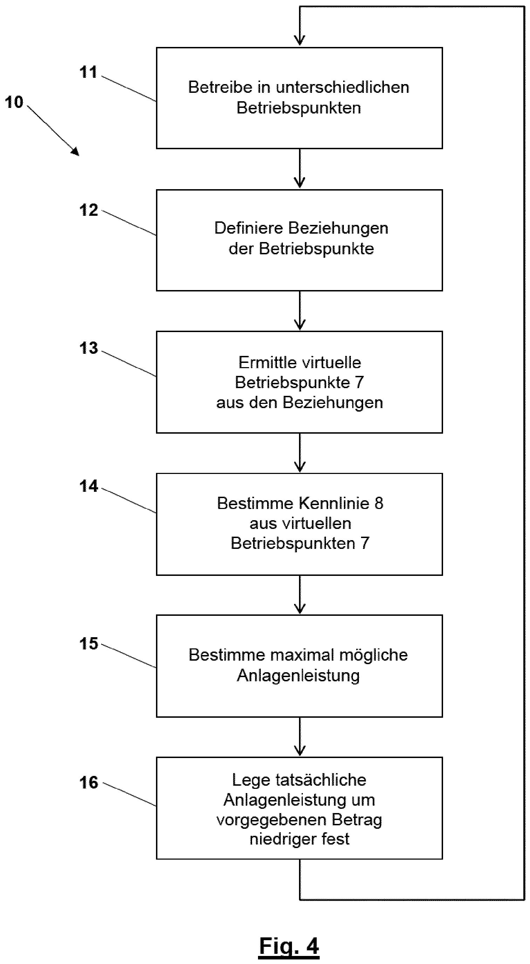

Das in **Fig. 4** gezeigte Ablaufdiagramm 10 beginnt mit einem Schritt 11, in dem die Photovoltaikgeneratoren 2 der Photovoltaikanlage 1 mit Hilfe der DC/AC-Wandler 3 von der Steuerung 6 in unterschiedlichen Betriebspunkten betrieben werden. In einem Schritt 12 werden für den jeweiligen Zeitpunkt Beziehungen der Betriebspunkte der einzelnen Photovoltaikgeneratoren 2 zu den virtuellen Betriebspunkten 7 des Standardgenerators definiert, die alle Unterschiede der Photovoltaikgeneratoren 2 und ihrer Betriebsbedingungen zu dem jeweiligen Zeitpunkt möglichst vollständig berücksichtigen,wobei man sich beispielsweise bei Erstinbetriebnahme der Photovoltaikanlage 1 dieser Definition der Beziehungen die alle Unterschiede möglichst vollständig berücksichtigen iterativ annähern kann. So kann in einer ersten Näherung eine Annahme über die Beziehungen der Betriebspunkte der einzelnen Photovoltaikgeneratoren 2 zu den virtuellen Betriebspunkten 7 des Standardgenerators als Definition fungieren, beispielsweise aus der Kenntnis der Anzahl angeschlossener Photovoltaikmodule und deren Verschaltung (seriell/parallel) für die jeweiligen Photovoltaikgeneratoren 2. Wählt man als Standardgenerator ein einzelnes Photovoltaikmodul, lässt sich die Beziehung zwischen der Leistung P(U) des gewählten Standardgenerators (bei gegebener Spannung und bekannter Sonneneinstrahlungsstärke) und Pᵢ(U) des i-ten Photovoltaikgenerators 2 (bei gleicher Spannung und Sonneneinstrahlungsstärke) arithmetisch ermitteln, das heißt die Beziehung zwischen dem Standardgenerator und dem i-ten Photovoltaikgenerator 2 kann in einer ersten Näherung als Faktor definiert werden, der die Anzahl der parallel bzw. seriell verschalteten Module beschreibt. Nach Durchführung der weiteren Schritte des Verfahrens kann diese erste Definition schrittweise verfeinert werden, siehe weiter unten "erneutes Durchlaufen von Schritt 12".

In einem Schritt 13 werden dann aus den Beziehungen die virtuellen Betriebspunkte 7 ermittelt, die zu den aktuellen Betriebspunkten der Photovoltaikgeneratoren 2 gehören. In einem Schritt 14 wird auf Basis dieser virtuellen Betriebspunkte 7 die Kennlinie 8 des Standardgenerators samt ihres Maximums Pₘₐₓ (Uₘₚₚ) ermittelt. Hieraus wird dann in einem Schritt 15 die maximal mögliche Anlagenleistung der Photovoltaikanlage 1 bestimmt. In einem Schritt 16 wird dann die tatsächliche Anlagenleistung, die von der Steuerung 6 vorgegeben wird, um einen vorgegebenen Betrag, d. h. den Betrag der gewünschten Regelleistung, die von der Photovoltaikanlage 1 vorzuhalten ist, niedriger festgelegt als die maximal mögliche Anlagenleistung. Diese maximal mögliche Anlagenleistung wird auf die Photovoltaikgeneratoren 2 aufgeteilt, d.h. deren zugehörigen DC/AC-Wandlern 3 wird von der Steuerung 6 ein Spannungswert oder einer aktueller Sollleistungswert übermittelt, so dass sich in Summe der gewünschte Anlagenleistungswert ergibt. Dies stellt zugleich das erneute Durchführen von Schritt 11 dar.

In einem erneuten Durchlaufen von Schritt 12 werden die aktuellen Werte Pᵢ (U) für den i-ten Photovoltaikgenerator 2 mit den zugehörigen virtuellen Betriebspunkte 7 des Standardgenerators P(U) verglichen und daraus kann auf eine verbesserte Abbildung der Werte Pi (U) auf P(U), d.h. auf eine genauere mathematische Beziehung der Betriebspunkte der einzelnen Photovoltaikgeneratoren 2 zu den virtuellen Betriebspunkten 7 geschlossen werden.

Die Schritte 11 bis 16 laufen wiederholt ab, wobei die Wiederholungsfrequenz in einem typischen Bereich von 0,01 Hz bis 10 Hz liegt.

### BEZUGSZEICHENLISTE

- 1: Photovoltaikanlage
- 2: Photovoltaikgeneratoren
- 3: DC/AC-Wandler
- 4: Ausgang
- 5: Wechselstromnetz
- 6: Steuerung
- 7: virtueller Betriebspunkt
- 8: Kennlinie
- 9: verworfener virtueller Betriebspunkt
- 10: Ablaufdiagramm
- 11: Schritt
- 12: Schritt
- 13: Schritt
- 14: Schritt
- 15: Schritt
- 16: Schritt

## Patentansprüche

1. Verfahren zur Erfassung einer zu einem Zeitpunkt maximal möglichen Anlagenleistung einer zu diesem Zeitpunkt nicht bei dieser maximal möglichen Anlagenleistung betriebenen Photovoltaikanlage (1), die mehrere Photovoltaikgeneratoren (2) umfasst,
- wobei die Photovoltaikgeneratoren (2) zu dem Zeitpunkt zumindest teilweise in unterschiedlichen Betriebspunkten betrieben werden,
**dadurch gekennzeichnet,**
- **dass** Beziehungen zwischen den unterschiedlichen Betriebspunkten der einzelnen Photovoltaikgeneratoren (2) und virtuellen Betriebspunkten (7) eines Standardgenerators definiert werden,
- **dass** aus den den unterschiedlichen Betriebspunkten der einzelnen Photovoltaikgeneratoren (2) entsprechenden virtuellen Betriebspunkten (7) des Standardgenerators eine Kennlinie (8) des Standardgenerators und ein Maximum dieser Kennlinie (8) zu dem Zeitpunkt bestimmt werden und
- **dass** aus dem Maximum der Kennlinie (8) des Standardgenerators die maximal mögliche Anlagenleistung zu dem Zeitpunkt bestimmt wird.

2. Verfahren nach Anspruch 1, **dadurch gekennzeichnet, dass** die Photovoltaikgeneratoren (2) zu dem Zeitpunkt in Betriebspunkten betrieben werden, die mindestens drei oder fünf oder sieben unterschiedlichen virtuellen Betriebspunkten (7) des Standardgenerators entsprechen.

3. Verfahren nach Anspruch 2, **dadurch gekennzeichnet, dass** die Betriebspunkte, in denen die einzelnen Photovoltaikgeneratoren (2) zu dem Zeitpunkt betrieben werden, Betriebspunkte umfassen, die virtuellen Betriebspunkten (7) des Standardgenerators entsprechen, welche über einen an ihr Maximum angrenzenden Bereich der Kennlinie (8) des Standardgenerators hinweg verteilt sind.

4. Verfahren nach einem der vorhergehenden Ansprüche, **dadurch gekennzeichnet, dass** die einzelnen Photovoltaikgeneratoren (12) mit Hilfe einzelner DC/DC- und/oder DC/AC-Wandler (3) in den unterschiedlichen Betriebspunkten betrieben werden .

5. Verfahren nach einem der vorhergehenden Ansprüche, **dadurch gekennzeichnet, dass** beim Bestimmen der maximal möglichen Anlagenleistung zu dem Zeitpunkt die maximalen Leistungen der einzelnen Photovoltaikgeneratoren (2) aus dem Maximum der Kennlinie (8) des Standardgenerators und den Beziehungen zwischen den Betriebspunkten der einzelnen Photovoltaikgeneratoren (2) und den virtuellen Betriebspunkten (7) des Standardgenerators berechnet werden.

6. Verfahren nach einem der vorhergehenden Ansprüche, **dadurch gekennzeichnet, dass** die Beziehungen zwischen den Betriebspunkten der einzelnen Photovoltaikgeneratoren (2) und den virtuellen Betriebspunkten (7) des Standardgenerators mindestens einen der folgenden Aspekte berücksichtigt:
- unterschiedliche Nennleistung der einzelnen Photovoltaikgeneratoren (2);
- unterschiedliche Typen der einzelnen Photovoltaikgeneratoren (2);
- Herstellungstoleranzen der einzelnen Photovoltaikgeneratoren (2);
- unterschiedliche Degenerationen der einzelnen Photovoltaikgeneratoren (2);
- unterschiedliche Ausrichtungen der einzelnen Photovoltaikgeneratoren (2) zur Sonne;
- unterschiedliche Verschattungen der einzelnen Photovoltaikgeneratoren (2);
- unterschiedliche Temperaturen der einzelnen Photovoltaikgeneratoren (2);
- unterschiedliche Typen der einzelnen DC/DC- und/oder DC/AC-Wandler (3) und
- Herstellungstoleranzen der einzelnen DC/DC- und/oder DC/AC-Wandler (3).

7. Verfahren nach einem der vorhergehenden Ansprüche, **dadurch gekennzeichnet, dass** die Beziehungen zwischen den Betriebspunkten der einzelnen Photovoltaikgeneratoren (2) und den virtuellen Betriebspunkten (7) des Standardgenerators speziell für den jeweiligen Zeitpunkt bestimmt werden.

8. Verfahren nach einem der vorhergehenden Ansprüche, **dadurch gekennzeichnet, dass** beim Bestimmen der Kennlinie (8) des Standardgenerators aus seinen unterschiedlichen virtuellen Betriebspunkten eine Modellkennlinie an die unterschiedlichen virtuellen Betriebspunkte angefittet wird.

9. Verfahren nach Anspruch 8, **dadurch gekennzeichnet, dass** beim Anfitten der Modellkennlinie über ein vorgegebenes Maß hinaus abweichende virtuelle Betriebspunkte (9) verworfen werden.

10. Verfahren nach Anspruch 8, **dadurch gekennzeichnet, dass** die Beziehungen zwischen den Betriebspunkten der Photovoltaikgeneratoren (2), die zu den verworfenen Betriebspunkten gehören, und den virtuellen Betriebspunkten (7) des Standardgenerators so modifiziert werden, sich die jeweiligen virtuellen Betriebspunkte an die angefittete Modellkennlinie annähern.

11. Verfahren nach einem der vorhergehenden Ansprüche, **dadurch gekennzeichnet, dass** die unterschiedlichen Betriebspunkte so eingestellt werden, dass die Photovoltaikanlage (1) zu dem Zeitpunkt bei einer tatsächlichen Anlagenleistung betrieben wird, die mindestens um einen vorgegebenen Betrag unter der zu dem Zeitpunkt maximal möglichen Anlagenleistung der Photovoltaikanlage (1) liegt.

## Claims

1. A method for detecting a system power, which is maximally possible at a point in time, of a photovoltaic system (1), which is not being operated at said maximally possible system power at said point in time and which comprises a plurality of photovoltaic generators (2),
- wherein the photovoltaic generators (2) are operated at the point in time at least partly at different operating points,
**characterized in that**
- relationships between the different operating points of the individual photovoltaic generators (2) and virtual operating points (7) of a standard generator are defined,
- a characteristic curve (8) of the standard generator and a maximum of said characteristic curve (8) at the point in time are determined from the virtual operating points (7) of the standard generator that correspond to the different operating points of the individual photovoltaic generators (2) and
- the maximally possible system power at the point in time is determined from the maximum of the characteristic curve (8) of the standard generator.

2. The method as claimed in claim 1, **characterized in that** the photovoltaic generators (2) are operated at the point in time at operating points that correspond to at least three or five or seven different virtual operating points (7) of the standard generator.

3. The method as claimed in claim 2, **characterized in that** the operating points at which the individual photovoltaic generators (2) are operated at the point in time comprise operating points that correspond to virtual operating points (7) of the standard generator, which are distributed over a region of the characteristic curve (8) of the standard generator adjoining the maximum thereof.

4. The method as claimed in one of the preceding claims, **characterized in that** the individual photovoltaic generators (12) are operated at the different operating points with the aid of individual DC/DC and/or DC/AC converters (3).

5. The method as claimed in one of the preceding claims, **characterized in that**, in the determination of the maximally possible system power at the point in time, the maximum powers of the individual photovoltaic generators (2) are calculated from the maximum of the characteristic curve (8) of the standard generator and the relationships between the operating points of the individual photovoltaic generators (2) and the virtual operating points (7) of the standard generator.

6. The method as claimed in one of the preceding claims, **characterized in that** the relationships between the operating points of the individual photovoltaic generators (2) and the virtual operating points (7) of the standard generator take into account at least one of the following aspects:
- different rated power of the individual photovoltaic generators (2);
- different types of individual photovoltaic generators (2) ;
- production tolerances of the individual photovoltaic generators (2);
- different degenerations of the individual photovoltaic generators (2);
- different orientations of the individual photovoltaic generators (2) toward the sun;
- different shadings of the individual photovoltaic generators (2);
- different temperatures of the individual photovoltaic generators (2);
- different types of individual DC/DC and/or DC/AC converters (3) and
- production tolerances of the individual DC/DC and/or DC/AC converters (3).

7. The method as claimed in one of the preceding claims, **characterized in that** the relationships between the operating points of the individual photovoltaic generators (2) and the virtual operating points (7) of the standard generator are determined specifically for the respective point in time.

8. The method as claimed in one of the preceding claims, **characterized in that**, in the determination of the characteristic curve (8) of the standard generator from the different virtual operating points thereof, a model characteristic curve is fitted to the different virtual operating points.

9. The method as claimed in claim 8, **characterized in that**, when the model characteristic curve is fitted, virtual operating points (9) that deviate beyond a prescribed extent are discarded.

10. The method as claimed in claim 8, **characterized in that** the relationships between the operating points of the photovoltaic generators (2), which belong to the discarded operating points, and the virtual operating points (7) of the standard generator are modified so that the respective virtual operating points approximate the fitted model characteristic curve.

11. The method as claimed in one of the preceding claims, **characterized in that** the different operating points are set so that the photovoltaic system (1) is operated at the point in time at an actual system power that lies at least a prescribed magnitude below the system power of the photovoltaic system (1) that is maximally possible at the point in time.

## Revendications

1. Procédé de détection d'une puissance maximale possible à un moment donné d'une installation photovoltaïque (1) qui n'est pas exploitée à cette puissance maximale possible à ce moment donné et qui comprend plusieurs générateurs photovoltaïques (2),
- dans lequel les générateurs photovoltaïques (2) sont exploités au moins partiellement à différents points de fonctionnement à ce moment donné,
**caractérisé en ce que**
- des relations sont définies entre les différents points de fonctionnement des générateurs photovoltaïques individuels (2) et les points de fonctionnement virtuels (7) d'un générateur standard,
- une courbe caractéristique (8) du générateur standard et un maximum de cette courbe caractéristique (8) à ce moment sont déterminés à partir des points de fonctionnement virtuels (7) du générateur standard correspondant aux différents points de fonctionnement des générateurs photovoltaïques individuels (2), et
- la puissance maximale possible de l'installation à ce moment est déterminée à partir du maximum de la courbe caractéristique (8) du générateur standard.

2. Procédé selon la revendication 1, **caractérisé en ce que** les générateurs photovoltaïques (2) sont exploités à ce moment à des points de fonctionnement qui correspondent à au moins trois ou cinq ou sept points de fonctionnement virtuels différents (7) du générateur standard.

3. Procédé selon la revendication 2, **caractérisé en ce que** les points de fonctionnement dans lesquels les générateurs photovoltaïques individuels (2) sont exploités à ce moment comprennent des points de fonctionnement qui correspondent à des points de fonctionnement virtuels (7) du générateur standard, qui sont répartis sur une zone de la courbe caractéristique (8) du générateur standard qui est voisine de son maximum.

4. Procédé selon l'une des revendications précédentes, **caractérisé en ce que** les générateurs photovoltaïques individuels (12) sont exploités aux différents points de fonctionnement au moyen de convertisseurs individuels DC/DC et/ou DC/AC (3).

5. Procédé selon l'une des revendications précédentes, **caractérisé en ce que**, lors de la détermination de la puissance maximale possible de l'installation à ce moment, les puissances maximales des générateurs photovoltaïques individuels (2) sont calculées à partir du maximum de la courbe caractéristique (8) du générateur standard et des relations entre les points de fonctionnement des générateurs photovoltaïques individuels (2) et les points de fonctionnement virtuels (7) du générateur standard.

6. Procédé selon l'une des revendications précédentes, **caractérisé en ce que** les relations entre les points de fonctionnement des générateurs photovoltaïques individuels (2) et les points de fonctionnement virtuels (7) du générateur standard prennent en compte au moins un des aspects suivants :
- la puissance nominale différente des générateurs photovoltaïques individuels (2) ;
- différents types de générateurs photovoltaïques individuels (2) ;
- les tolérances de fabrication des générateurs photovoltaïques individuels (2) ;
- les différentes dégénérescences des générateurs photovoltaïques individuels (2) ;
- les différentes orientations des générateurs photovoltaïques individuels (2) par rapport au soleil ;
- différents ombres de générateurs photovoltaïques individuels (2) ;
- les différentes températures des générateurs photovoltaïques individuels (2) ;
- les différents types de convertisseurs individuels DC/DC et/ou DC/AC (3) et
- les tolérances de fabrication des convertisseurs individuels DC/DC et/ou DC/AC (3).

7. Procédé selon l'une des revendications précédentes, **caractérisé en ce que** les relations entre les points de fonctionnement des générateurs photovoltaïques individuels (2) et les points de fonctionnement virtuels (7) du générateur standard sont déterminées spécifiquement pour le moment respectif.

8. Procédé selon l'une des revendications précédentes, **caractérisé en ce que** lors de la détermination de la courbe caractéristique (8) du générateur standard à partir de ses différents points de fonctionnement virtuels, une courbe caractéristique modèle est ajustée aux différents points de fonctionnement virtuels.

9. Procédé selon la revendication 8, **caractérisé en ce que**, lors de l'ajustement de la courbe caractéristique du modèle aux différents points de fonctionnement virtuels (9), qui s'écartent au-delà d'une étendue prédéterminée, sont rejetés.

10. Procédé selon la revendication 8, **caractérisé en ce que** les relations entre les points de fonctionnement des générateurs photovoltaïques (2) appartenant aux points de fonctionnement rejetés et les points de fonctionnement virtuels (7) du générateur standard sont modifiées de telle manière que les points de fonctionnement virtuels respectifs se rapprochent de la courbe caractéristique du modèle ajusté.

11. Procédé selon l'une des revendications précédentes, **caractérisé en ce que** les différents points de fonctionnement sont réglés de telle sorte que l'installation photovoltaïque (1) est exploitée à ce moment à une puissance réelle de l'installation qui est au moins d'une quantité prédéterminée inférieure à la puissance maximale possible de l'installation photovoltaïque (1) à ce moment.
